# EUROPEAN PATENT SPECIFICATION

(11) **EP 0 516 250 B1**
(45) Date of publication and mention of the grant of the patent: **17.01.1996**
(21) Application number: 92202621.6
(22) Date of filing: 30.10.1985
(51) Int. Cl.: B21B 45/00, C21D 9/00, C21D 1/74

(54) **Heat retaining means**
Vorrichtung zur Wärmerückhaltung
Dispositif pour retenir la chaleur

(30) Priority: 07.11.1984 GB 8428129
(43) Date of publication of application: 02.12.1992
(62) Divisional of application: 85307856.6
(73) Proprietor: ENCOMECH ENGINEERING SERVICES LIMITED, Epsom Surrey KT19 1DT (GB)
(72) Inventor: Laws, William R., Worcester Park, Surrey (GB); Reed, Geoffrey R., Tadworth, Surrey (GB)
(74) Representative: Gura, Henry Alan

(56) References cited:
- DE-A- 2 104 845
- DE-C- 1 159 482
- GB-A- 1 603 428

## Description

This invention relates to heat insulating elements for reducing heat losses when handling hot material. It is particularly concerned with reducing heat loss from material in hot-rolling mills, eg. from metal slabs and sections, and in continuous casting plant but is applicable to other installations and not only in metal processing industries.

The use of heat-reflecting panels to reduce heat loss from metal slabs and sections is known, as in EP 198595, but such panels have limitations, particularly in their use as upper and side boundaries of an enclosure. It is known that the efficiency of heat insulation falls as the space between the hot material and the enclosure walls increases, but in most practical applications a rolling mill is required to deal with a large range of sizes of material so that there is an inevitable loss of efficiency when handling sections smaller than the largest for which the installation is designed.

Efficient heat-insulating panels having a hollow body comprising a thin-walled metal shell provided with a heat insulating filling, such as are described in GB 1603428, are relatively fragile and protective measures need to be taken if they are to be disposed close to the path of the material in a hot rolling mill. The additional cost and complication of these measures are only justified by the fact that damage to the hot faces of the panels can result in considerable financial loss having regard to the operating costs of modern hot-rolling mills.

The known panels have been used to form tunnel-like enclosures along the material path through the rolling mill, the heat losses at the ends of the tunnel being unimportant if the path is occupied by moving material for most of the time. They would be less effective if they were to be used to limit heat losses from a static slab or billet near one or both ends of the enclosure, when losses through those ends will be significant.

It is an object of the present invention to provide a means for forming a heat-insulating shield which, depending upon particular requirements, can be arranged to adapt to particular forms of heated material to be screened or can be arranged to provide a readily displaceable screen past which heated material can be moved.

The present invention provides a heat insulating element having a hollow body comprising a thin-walled metal shell provided with a heat-insulating filling and at least one outwardly projecting fin, the element being arranged to be connectable with similar elements in a string of elements for use as a suspended heat insulating means.

By assembling together a series of strings of such elements it is possible to provide an effective and flexible heat-insulating screen for reducing the heat loss from a mass of hot material.

Such a screen can be used for example to close off an opening to an enclosure, a series of strings of elements being hung front the upper edge of the opening, the numbers of said elements in said strings and their dispositions being such that they at least substantially close off any direct heat radiation from the interior of the enclosure but are able to be freely swept aside by the material entering or leaving the enclosure since they are freely suspended. For the connection of the elements and their suspension, flexible means may be used in the form of temperature-resistant metal wires, cables or chains each of which has a number of said bodies at spaced intervals along its length. The fins can allow the elements of adjacent strings to lie in an overlapping manner so as to increase the opacity of the screen with fewer elements than a screen composed of elements of, for example, purely spherical form.

The formation of a screen from strings of elements flexibly linked together is itself known. In US 1128206 metal chains composed of solid metal bodies or lengths of tubing are proposed as a screen for a furnace door to baffle an onrush of cold air into the furnace when the door is opened. Such a construction has relatively limited applicability and efficiency, however. The proposed elements themselves have a relatively high thermal capacity and because of their shape would have to be packed together in much greater numbers to form a complete screen, so that as a screen for a heated mass of material they would have the disadvantage of extracting a greater quantity of heat from the material. Such an effect and the possibility of increased thermal gradients at edges and corners of the material, would be undesirable for a heat slab or section in a hot rolling mill. It is possible to arrange that elements according to the invention rise quickly to the temperature of hot material in proximity to them, the consequent re-radiation of heat from the elements reducing the heat interchange with the hot material.

Preferably, an element according to the invention has its hollow body formed from at least one generally parallelogramic sheet metal blank. This permits the reduction of wastage to make better use of the metal from which the hollow bodies are formed.

Elements according to the invention can be assembled into screens that form part of a primary enclosure, or that form a supplementary means of heat insulation within an enclosed chamber, for example for the ends and side regions of the material. They may also be used in the interior of the chamber to reduce the free space around the material.

While the use of a screen of said elements in an enclosure is able to reduce the problems described above by being better adapted to surrounding a heated mass closely, they may also be used in other arrangements. For example, a free screen of such elements can be placed around a machine such as a forging press or a flexible door for a reheating furnace, and there are also useful applications outside the metal-working industry, eg. in glass and ceramics manufacture, for such heat-insulating means. There may also be other applications in which the elements can be utilized without being connected in strings, or where strings of elements can be used without a surrounding enclosure, and such possibilities are also within the scope of the present invention.

The invention will be described in more detail by way of example with reference to the accompanying diagrammatic drawings, in which:
Figs. 1 and 2 illustrate, respectively a heat-insulating element according to the invention, and a series of such elements connected in strings, and
Figs. 3 and 4 are mutually transverse views of strings constructed from another form of heat-insulating element according to the invention.

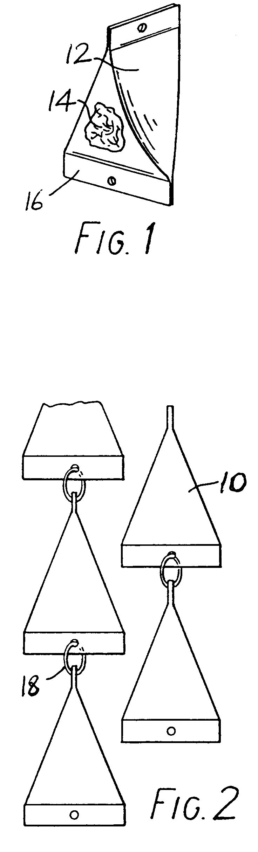

Fig. 1 illustrates a first form of heat-insulating element 10 made up of a thin-walled metal body or shell 12 with a filling 14 of high-grade insulation, eg. of ceramic fibre. The shell 12 has a four-sided or tetrahedral form with fins 16 at opposite ends. This form of shell can be produced from a continuous length of tubing and the elements connected together by rings 18 through the fins, as shown in Fig. 2.

The outer shell 12 is formed from a material with suitable resistance to high temperatures. However, if intended as a superimposed shield to depend from above the screened material, for example if the elements are suspended in a tunnel-like enclosure to maintain the temperature of material moving underneath the elements and through the enclosure, the upper surfaces of the bodies may be largely shielded from direct heat radiation from the hot material can be of a lower grade alloy.

It has been found that for the most effective insulation against thermal radiation, the elements should be able to collapse closely against each other when they hang freely and form a screen of several layers. By forming each element as an insulating body with projecting metal fins, this condition can be fulfilled and a given standard of thermal insulation can be obtained with the use of fewer elements.

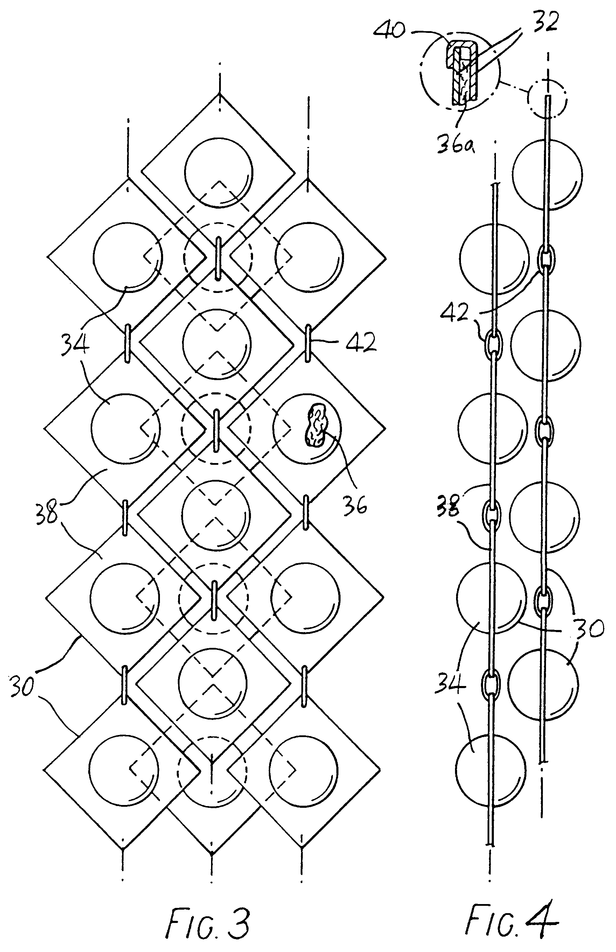

In the example of Figs. 3 and 4, square sheet metal blanks have hemispheres pressed in them and each element 30 is formed by a pair of pressed blanks 32 placed back to back, the hemispherical depressions providing a hollow sphere 34 that is filled with insulating material 36, as already described, and the two parts being secured together at their margins, eg. by spot welding, which form rectangular fins 38. A ceramic fibre paper 36a may be sandwiched between the margins of the two parts forming the fins 38 so that the fins themselves have heat-insulating properties; in this form, instead of spot welding the two parts are secured together and the ceramic fibre enclosed by bending the edges of the fins one over the other to form a clinched seal as shown at 40. Each element has holes drilled in diagonally opposite corners so that heat-resistant connecting rings 42 can connect adjacent elements to form vertical strings.

It is of course possible to provide such elements with other than spherical insulating portions, but generally parallelogramic or more particularly rectangular sheet metal blanks will be preferred. The outer margins of such blanks can conveniently provide fins of such a form as to produce the desired screening effect when arranged in a pattern with other similar elements while giving the maximum use of the sheet material without wastage. The use of a lower grade alloy for regions of the shell largely shielded from direct heat radiation, as already mentioned above, provide scope for further cost savings.

By forming a multiple layer screen in which strings of finned elements of succeeding layers are placed behind each other in laterally staggered relation, as is indicated in Figs. 3 and 4, it is possible with as few as two layers to form a screen that substantially stops direct radiation loss from a workpiece. Additional layers can be provided to give the desired insulating properties.

The lowermost one or more of a string of elements can contain a solid metal mass which helps to keep the string at its maximum possible extension and also acts as a thermal store. It is also possible to provide one or more inner walls or membranes within the external body or shell of an element.

Further examples of the manner in which heat-insulating elements according to the invention can be employed can be found in our co-pending European Patent Application 85307856.6 (EP 181740A) from which this application is divided.

## Claims

1. A heat insulating element having a hollow body comprising a thin-walled metal shell (12 or 32) provided with a heat-insulating filling (14 or 36) characterised in that at least one outwardly projecting fin (16 or 38) is provided on the element and that the element is arranged to be connectable with similar elements in a string of elements for use as a suspended heat insulating means.

2. A heat insulating element according to claim 1 wherein the hollow body (10) is of substantially tetrahedral form.

3. A heat insulating element according to claim 1 or claim 2 wherein said at least one projecting fin (38) is composed of a heat insulating layer (36a) between outer metal walls.

4. A heat insulating element according to any one of claims 1 to 3 wherein the hollow body (12 or 32) is formed from at least one generally parallelogramic sheet metal blank.

5. A heat insulating element according to any one of claims 1 to 4 wherein there is at least one internal membrane within the hollow body.

6. A heat insulating element according to any one of claims 1 to 5 wherein the projecting fin or fins (38) surrounds a hollow body portion (34) of the element.

7. A string of heat insulating elements according to any one of claims 1 to 6.

8. A string of heat insulating elements according to claim 7 wherein at least a lowermost element of the string has a weighting mass within its hollow body.

## Patentansprüche

1. Wärmeisolierelement mit einem Hohlkörper, der eine dünnwandige Metallhülle (12 oder 32) aufweist, die mit einer wärmeisolierenden Füllung (14 oder 36) versehen ist, dadurch gekennzeichnet, daß zumindest eine nach außen ragende flächige Rippe (16 oder 38) auf dem Element vorgesehen ist und daß das Element vorgesehen ist, mit entsprechenden Elementen zu einer Elementenkette zur Verwendung als hängendes Wärmeisoliermittel verbindbar zu sein.

2. Wärmeisolierelement nach Anspruch 1, worin der Hohlkörper (10) im wesentlichen eine Tetraederform besitzt.

3. Wärmeisolierelement nach Anspruch 1 oder 2, worin die zumindest eine vorragende flächige Rippe (38) aus einer Wärmeisolierschicht (36a) zwischen äußeren Metallwänden besteht.

4. Wärmeisolierelement nach einem der Ansprüche 1 bis 3, worin der Hohlkörper (12 oder 32) aus zumindest einem im allgemeinen parallelogrammförmigen Blechrohling besteht.

5. Wärmeisolierelement nach einem der Ansprüche 1 bis 4, worin zumindest eine Innenmembran innerhalb des Hohlkörpers vorgesehen ist.

6. Wärmeisolierelement nach einem der Ansprüche 1 bis 5, worin die vorragende(n) Rippe(n) (38) einen Hohlkörperabschnitt (34) des Elements umgibt/umgeben.

7. Kette von Wärmeisolierelementen gemäß einem der Ansprüche 1 bis 6.

8. Kette von Wärmeisolierelementen nach Anspruch 7, worin zumindest ein unterstes Element der Kette eine Beschwerungsmasse innerhalb seines Hohlkörpers besitzt.

## Revendications

1. Elément thermo-isolant ayant un corps creux comprenant une enveloppe en métal à paroi mince (12 ou 32) pourvue d'un garnissage thermo-isolant (14 ou 36) caractérisé en ce qu'au moins une ailette dépassant vers l'extérieur (16 ou 38) est prévue sur l'élément et en ce que l'élément est agencé pour pouvoir être connecté à des élément similaires dans une série d'éléments pour une utilisation comme moyen d'isolement thermique suspendu.

2. Elément thermo-isolant selon la revendication 1 où le corps creux (10) est sensiblement en forme de tétraèdre.

3. Elément thermo-isolant selon la revendication 1 ou la revendication 2 où ladite au moins une ailette (38) qui dépasse se compose d'une couche thermo-isolante (36a) entre les parois externes en métal.

4. Elément thermo-isolant selon l'une quelconque des revendications 1 à 3 où le corps creux (12 ou 32) est formé d'au moins une ébauche de métal en tôle généralement en parallélogramme.

5. Elément thermo-isolant selon l'une des revendications 1 à 4, où il y a au moins une membrane interne dans le corps creux.

6. Elément thermo-isolant selon l'une quelconque des revendications 1 à 5 où les ailettes qui dépassent (38) entourent une portion de corps creux (34) de l'élément.

7. Série d'éléments thermo-isolants selon l'une quelconque des revendications 1 à 6.

8. Série d'éléments thermo-isolants selon la revendication 7 où au moins un élément le plus bas de la série a une masse pesante dans son corps creux.
